# FASCICULE DE BREVET EUROPEEN

(11) **EP 2 598 358 B1**
(45) Date de publication et mention de la délivrance du brevet: **02.09.2015**
(21) Numéro de dépôt: 11741661.0
(22) Date de dépôt: 12.07.2011
(51) Int. Cl.: B60K 1/04, H01M 2/10

(54) **DISPOSITIF DE FIXATION AMOVIBLE D'UNE BATTERIE D'UN VEHICULE AUTOMOBILE**
ABNEHMBARE BATTERIEBEFESTIGUNGSVORRICHTUNG FÜR KRAFTFAHRZEUG
REMOVABLE FASTENING ARRANGEMENT OF A BATTERY FOR VEHICLE

(30) Priorité: 26.07.2010 FR 1056130
(43) Date de publication de la demande: 05.06.2013
(73) Titulaire: Renault s.a.s., 92100 Boulogne-Billancourt (FR)
(72) Inventeur: LEJEUNE, François-Xavier, F-92190 Meudon (FR); TURPIN, Mickaël, F-92190 Meudon (FR); THEVENART, Joel, F-78370 Plaisir (FR); RICHEZ, Emmanuel, F-78770 Antouillet (FR)
(86) Numéro de dépôt international: PCT/FR2011/051661
(87) Numéro de publication internationale: WO 2012/013886

(56) Documents cités:
- DE-A1-102007 032 210
- FR-A1- 2 936 760
- FR-A3- 2 940 638
- FR-A5- 2 157 430
- US-A- 5 501 289

## Description

La présente invention se rapporte à un dispositif de fixation amovible d'un conteneur d'énergie d'alimentation d'un moteur d'entraînement d'un véhicule automobile et un procédé de montage/démontage d'un tel conteneur d'énergie. Elle concerne aussi un véhicule automobile en tant que tel intégrant un tel dispositif de fixation d'un conteneur d'énergie d'alimentation.

Certains véhicules automobiles, comme les véhicules électriques ou hybrides, comprennent un conteneur d'énergie d'alimentation d'un moteur d'entraînement, comme une batterie électrique d'alimentation d'un moteur électrique. Lorsque le niveau d'énergie de cette batterie est faible, il est nécessaire de la recharger ou de la remplacer par une autre batterie chargée. Un échange peut par exemple être fait dans une station similaire à une station service dans laquelle on peut remplir un réservoir d'essence d'un véhicule automobile.

Le document US 5,501,289 décrit un dispositif selon le préambule de la revendication 1.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs. La quantité de capteurs et moyens électroniques nécessaires au fonctionnement d'une telle station la rend difficilement fiable et implique que son fonctionnement est peu robuste. Le document US 5 998 963 décrit de même une autre station d'échange de batteries pour véhicule automobile.

Pour un déploiement aisé des véhicules automobiles équipés d'une batterie, il est nécessaire de proposer un système fiable et robuste pour l'intervention sur le véhicule quand sa batterie est déchargée.

Ainsi, le but général de l'invention est de fournir une solution répondant à cette exigence et remédiant aux inconvénients mentionnés précédemment des procédés connus de l'état de la technique.

A cet effet, l'invention repose sur un dispositif de fixation amovible d'une batterie d'un véhicule automobile selon la revendication 1.

Le moyen de liaison avec la batterie de la partie inférieure peut consister en une surface horizontale pouvant supporter l'appui vertical de la batterie.

La partie supérieure peut comprendre une surface inférieure sensiblement plane comprenant une ouverture vers un volume creux, formant une serrure, et la partie inférieure peut comprendre le verrou et la vis.

La partie inférieure peut comprendre un corps principal au sein duquel est monté mobile en rotation la vis qui s'étend dans une direction verticale et au-dessus de ce corps principal pour venir coopérer avec le verrou.

La partie inférieure peut comprendre une ouverture supérieure au travers de laquelle passe la vis, le verrou se trouvant au-dessus de cette ouverture.

L'invention porte aussi sur un procédé de montage/démontage d'une batterie sur un véhicule automobile, à l'aide d'un dispositif de fixation amovible tel que décrit précédemment, caractérisé en ce qu'il comprend les étapes suivantes :
(E1) : positionnement d'un verrou d'une partie mâle au sein d'une ouverture d'une partie femelle ;
(E2) : rotation du verrou pour obtenir son verrouillage/déverrouillage au sein de la partie femelle, de sorte de verrouiller/déverrouiller la batterie sur le véhicule automobile;
(E3) : rotation d'une vis comprenant une partie filetée pour obtenir le serrage/desserrage du dispositif de fixation amovible.

La seconde étape (E2) peut comprendre la rotation de la vis entraînant la rotation du verrou jusqu'à son arrivée contre une butée et la troisième étape peut comprendre la rotation de la vis induisant la coopération de sa partie filetée avec une partie filetée du verrou, ce dernier restant fixé en rotation contre la butée.

L'invention porte aussi sur une partie inférieure d'un dispositif de fixation amovible d'une batterie d'un véhicule automobile, caractérisée en ce qu'elle comprend un moyen de liaison avec une batterie, et en ce qu'elle comprend un verrou lié à une vis comprenant une partie filetée, de sorte de permettre le verrouillage et déverrouillage puis le serrage et desserrage avec une partie supérieure par une double étape de rotation de la vis.

L'invention porte aussi sur un véhicule automobile comprenant une batterie d'alimentation caractérisé en qu'il comprend au moins un dispositif de fixation amovible de sa batterie tel que décrit ci-dessus.

La partie supérieure du au moins un dispositif de fixation amovible peut être fixée sous le châssis ou sous le coffre du véhicule automobile.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente en perspective de dessus un dispositif de fixation amovible d'une batterie sur un véhicule automobile selon un mode d'exécution de l'invention.
La figure 2 représente en perspective éclatée le dispositif de fixation amovible d'une batterie sur un véhicule automobile selon le mode d'exécution de l'invention.
Les figures 3 à 6 représentent schématiquement le dispositif de fixation amovible d'une batterie sur un véhicule automobile dans plusieurs configurations correspondant à différentes étapes d'un procédé de montage d'une batterie sur un véhicule automobile.

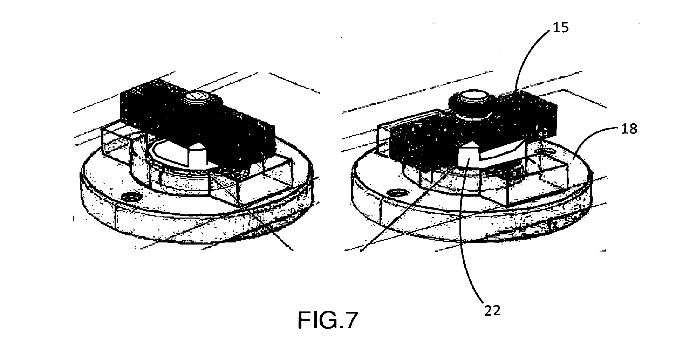

La figure 7 représente une vue en perspective du verrou du dispositif de fixation amovible d'une batterie sur un véhicule automobile selon le mode d'exécution de l'invention.

L'invention s'applique à tout véhicule automobile comprenant un conteneur d'énergie d'alimentation, positionné par exemple dans le coffre arrière ou sous le châssis. Dans la suite de la description, on décrit le montage d'un conteneur d'énergie au travers de la description du montage d'une batterie d'alimentation électrique d'un moteur d'entraînement d'un véhicule. L'invention s'applique toutefois à tout type de conteneur d'alimentation.

Le concept de l'invention repose sur une fixation amovible de la batterie sur le véhicule automobile, de sorte de pouvoir la retirer facilement pour son échange et/ou son rechargement quand cela est nécessaire, tout en garantissant son maintien fiable et sécurisé lorsque le véhicule est en route, par un principe de verrouillage/déverrouillage combiné à un principe de serrage/desserrage.

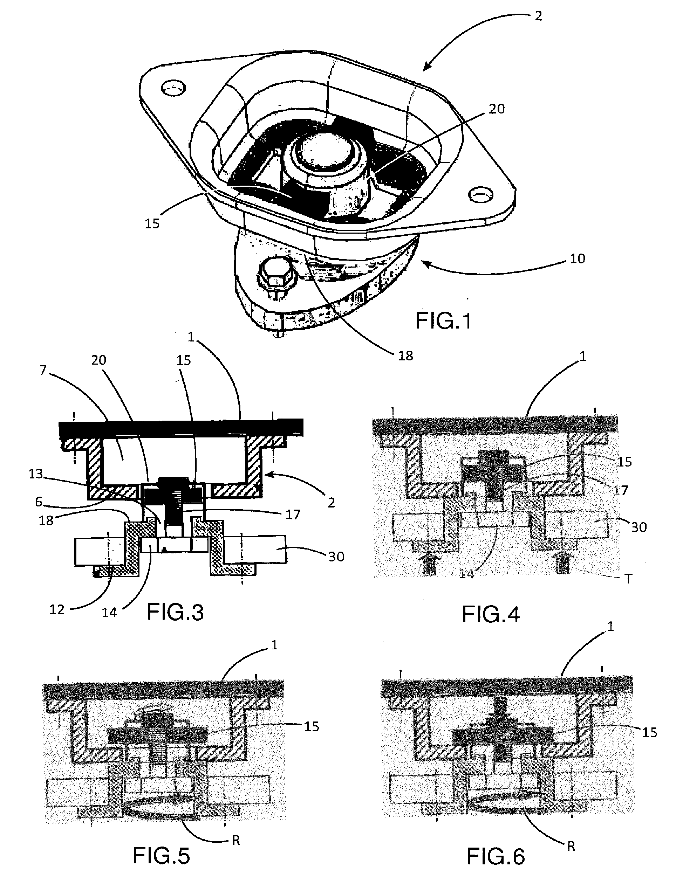

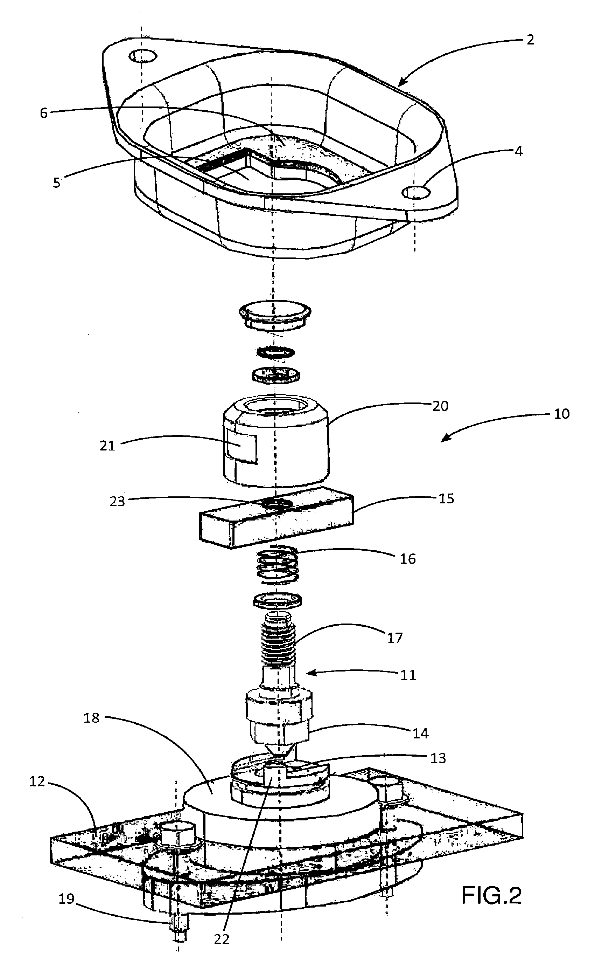

Les figures 1 et 2 illustrent le dispositif de fixation amovible d'une batterie selon le mode d'exécution de l'invention. Ce dispositif comprend une partie supérieure 2 femelle coopérant avec une partie inférieure 10 mâle. La partie supérieure 2 comprend des moyens de fixation 4 dans sa partie supérieure, consistant en des ouvertures, prévus pour une fixation sur un cadre aménagé au niveau de la partie inférieure d'un véhicule automobile. Enfin, elle comprend une ouverture 5 dans sa surface inférieure 6, qui remplit la fonction de trou de serrure, afin de coopérer avec un verrou 15 de la partie mâle 10 décrite ci-après.

La partie inférieure 10 mâle comprend principalement un axe central consistant en une vis 11 comprenant une tête 14 dans sa partie inférieure et un pas de vis 17 dans sa partie supérieure, prolongée par un moyen élastique 16 et un verrou 15. Ce dernier est recouvert par une coiffe 20, cylindrique, de dimension correspondant à la partie centrale arrondie de l'ouverture 5 formant trou de serrure de la partie femelle 2. La coiffe 20 présente des ouvertures 21 laissant dépasser les extrémités du verrou 15. Le verrou 15 comprend de plus une ouverture centrale filetée 23 qui coopère avec le pas de vis 17 de la vis 11 pour remplir une fonction d'écrou, qui sera explicitée par la suite. Le verrou 15 est ainsi mobile en translation et rotation par rapport à un corps principal de la partie inférieure 10 du dispositif de fixation amovible, qui comprend une surface supérieure 12 servant d'interface pour la fixation d'une batterie 30 de véhicule automobile, fixé au corps par des moyens de fixation 19, et une entretoise dont la surface supérieure 18 est destinée à venir en contact avec la surface inférieure de la partie femelle 2. Enfin, ce corps principal comprend dans sa partie supérieure, destinée à venir se loger au sein de la serrure de la partie femelle 2, une butée 22 qui coopère avec le verrou 15, tel que cela sera détaillé par la suite. La vis 11 s'étend au-delà de la surface supérieure du corps principal par une ouverture 13. Enfin, des joints d'étanchéité non représentés assurent l'étanchéité du dispositif.

Les figures 3 à 6 illustrent les différentes étapes d'un procédé de montage d'une batterie sur un véhicule automobile à l'aide d'un dispositif de fixation amovible selon l'invention, tel que décrit ci-dessus.

La figure 3 représente une configuration dans laquelle les deux parties supérieure 2 et inférieure 10 du dispositif de fixation amovible sont déverrouillées et indépendantes l'une de l'autre. La partie femelle 2 est fixée sur un cadre 1 disposé dans la partie inférieure d'un véhicule automobile, non représenté, la partie mâle 10 inférieure sur laquelle est fixée une batterie 30 se trouvant ainsi désolidarisée du véhicule automobile.

La figure 4 représente la première étape E1 du procédé de montage de la batterie 30, dans laquelle la partie mâle 10 inférieure du dispositif de fixation est approchée sous la partie femelle 2 supérieure, selon une translation verticale T, permettant d'introduire la coiffe 20 et le verrou 15 dans le volume 7 ménagé par la partie supérieure 2 femelle du dispositif, à travers son ouverture 5 formant serrure. En remarque, cette étape d'introduction du verrou 15 dans la serrure de la partie femelle nécessite la bonne orientation du verrou, dont la longueur est alignée à l'axe de longueur correspondante de l'ouverture 5 pour permettre son passage, tel que représenté sur la figure 4. Dans le même temps, la surface supérieure 18 de l'entretoise de la partie inférieure 10 vient en appui sur la surface inférieure 6 de la partie supérieure 2. Ce déplacement de la partie inférieure 10 du dispositif de fixation amovible, sur laquelle est fixée la batterie 30, est obtenu par tout moyen, de préférence automatiquement à l'aide d'un moyen de levage vertical, éventuellement complété par un moyen de déplacement horizontal afin d'amener l'ensemble sous le véhicule automobile.

La figure 5 illustre la seconde étape E2 du procédé de montage, qui consiste en une rotation R de la vis 11 de manière à entraîner une rotation du verrou 15 entraînant son verrouillage. Pour cela, la tête 14 de la vis 11 comprend un moyen de liaison dans sa surface inférieure permettant son actionnement par un outil de type visseuse pour la mise en oeuvre de sa rotation. Cette rotation R modifie l'orientation du verrou 15 dans une configuration où il reste verrouillé au sein du volume creux 7 de la partie supérieure 2 du dispositif, sans pouvoir s'échapper au travers de l'ouverture inférieure 5. Dans le mode d'exécution choisi, une rotation d'un quart de tour suffit lors de cette étape E2, qui se termine par le positionnement en appui sur la butée 22 du verrou 15, empêchant toute rotation ultérieure du verrou 15. En remarque, la vis 11 surmontée du verrou 15 forme un ensemble en forme de T, adapté pour coopérer avec l'ouverture 5 de la partie supérieure 2 qui comprend de même une forme allongée permettant l'introduction du T dans l'étape E1 et une partie plus étroite qui permet son verrouillage après la rotation du verrou 15. Dans cette étape, le verrou est suffisamment levé au-dessus de la surface inférieure 6 de la serrure, afin de pouvoir tourner sans avoir à surmonter des frottements trop importants sur cette surface.

La figure 6 illustre la troisième étape E3 du procédé de montage, qui consiste en la poursuite de la rotation R de la vis 11, entraînant la descente relative du verrou 15 par le biais de sa coopération avec la partie filetée 17 de la vis. Le verrou 15, immobilisé en rotation par la butée 22, fonctionne comme un écrou dans cette étape, jusqu'à venir en butée et en serrage sur la surface 6 de l'ouverture 5 au sein de la partie femelle 2. La figure 6 illustre la configuration finale verrouillée et serrée du dispositif de fixation, à la fin de cette étape E3.

En remarque, l'invention porte aussi sur le procédé de démontage de la batterie 30, qui comprend les étapes inverses du procédé de montage décrit ci-dessus, puisque ces étapes sont réversibles. Dans le démontage, les moyens élastiques 16 favorisent la remontée du verrou 15 pour son déverrouillage.

Finalement, l'invention porte donc sur un procédé de montage/démontage d'une batterie sur un véhicule automobile à l'aide d'un dispositif de fixation amovible, comprenant les étapes essentielles suivantes :
E1 : positionnement d'un verrou 15 d'une partie mâle au sein d'une ouverture 5 d'une partie femelle 2 ;
E2 : rotation du verrou 15 pour obtenir son verrouillage/déverrouillage au sein de la partie femelle 2, de sorte de verrouiller/déverrouiller la batterie sur le véhicule automobile ;
E3 : rotation d'une vis 11 comprenant une partie filetée 17 coopérant avec le verrou 15 pour obtenir le serrage/desserrage du verrou 15 au sein de la partie femelle 2 et donc le serrage/desserrage du dispositif de fixation de la batterie.

La seconde étape E2 peut consister en une rotation d'un quart de tour du verrou 15, voire toute autre rotation inférieure ou égale à un tour. La troisième étape E3 consiste en une rotation de serrage, dans laquelle il y a un rapprochement réciproque du verrou 15 et du reste de la partie mâle du dispositif de fixation. Le résultat final est une fixation fiable et sécurisée, la surface 6 de la partie supérieure 2 se trouvant en sandwich entre le verrou 15 et la surface 18 de l'entretoise.

Le procédé peut être mis en oeuvre manuellement. De préférence, il est mis en oeuvre par un outil de type visseuse pour mettre en oeuvre des efforts de rotation importants permettant d'atteindre un verrouillage et serrage performant.

Naturellement, le procédé de montage comprend aussi une étape préalable de liaison de la batterie 30 sur l'interface 12 prévue sur la partie inférieure du dispositif de fixation.

La batterie 30 a été représentée schématiquement : elle peut être positionnée dans un bac de batterie, consistant en un support sensiblement parallélépipédique, fixé sur plusieurs dispositifs de fixation amovible de batterie. Par exemple, quatre dispositifs de fixation amovible peuvent être utilisés pour chaque angle inférieur du bac de batterie en vue de leur liaison au véhicule automobile en quatre points de fixation. En variante, la batterie pourrait être disposée dans un bac de forme différente ou directement liée à un ou plusieurs dispositifs de fixation amovibles. De plus, quatre dispositifs de fixation peuvent être utilisés mais tout autre nombre supérieur ou égal à 1 pourrait aussi convenir.

Naturellement, l'invention ne se limite pas à la géométrie particulière du mode d'exécution décrit ci-dessus à titre d'exemple non limitatif. Ainsi, la géométrie de la vis 11, du verrou 15, de la serrure 5, 6, 7 pourrait présenter d'autres formes sans sortir du concept de l'invention. Le verrou 15 et l'écrou pourraient consister en deux éléments distincts. Les parties femelle et mâle de respectivement la partie supérieure 2 du dispositif de fixation et de la partie inférieure 10 du même dispositif peuvent être inversées, le verrou appartenant alors à la partie supérieure et la partie inférieure formant une serrure. Plus généralement, toute géométrie est envisageable pour mettre en oeuvre la coopération entre les deux composants du dispositif de fixation grâce à un double mouvement de verrouillage puis de serrage autour d'un axe vertical.

Finalement, la solution de l'invention atteint les avantages suivants :
- elle permet un remplacement rapide d'une batterie, dans une station d'échange spécialisée par exemple ;
- elle permet le maintien fixe de la batterie quand le véhicule se déplace, même en cas de forte accélération ;
- elle permet un grand nombre d'échanges avec une faible usure.

## Revendications

1. Dispositif de fixation amovible d'une batterie (30) d'un véhicule automobile, comprenant une partie supérieure (2) comprenant un moyen de fixation (4) sur un véhicule automobile et une partie inférieure (10) comprenant un moyen (12) de liaison avec la batterie (30), un verrou (15) et une vis (11) comprenant une partie filetée (17), de sorte de permettre le verrouillage et déverrouillage puis le serrage et desserrage des deux parties supérieure (2) et inférieure (10) entre elles, **caractérisé en ce qu'**il comprend une butée (22) coopérant avec le verrou (15), ce dernier comprenant une ouverture filetée (23) coopérant avec la partie filetée (17) de la vis (11), de sorte qu'une première rotation de la vis (11) entraîne la rotation du verrou (15) jusqu'à son appui contre la butée (22) et de sorte qu'une seconde rotation de la vis (11) entraîne le vissage du verrou (15) sur la vis (11).

2. Dispositif de fixation amovible d'une batterie d'un véhicule automobile selon la revendication précédente, **caractérisé en ce que** le moyen de liaison (12) avec la batterie (30) de la partie inférieure (10) consiste en une surface horizontale pouvant supporter l'appui vertical de la batterie.

3. Dispositif de fixation amovible d'une batterie d'un véhicule automobile selon l'une des revendications précédentes, **caractérisé en ce que** la partie supérieure (2) comprend une surface inférieure (6) sensiblement plane comprenant une ouverture (5) vers un volume creux (7), formant une serrure, et **en ce que** la partie inférieure (10) comprend le verrou (15) et la vis (11).

4. Dispositif de fixation amovible d'une batterie d'un véhicule automobile selon la revendication précédente, **caractérisé en ce que** la partie inférieure (10) comprend un corps principal (12, 18) au sein duquel est monté mobile en rotation la vis (11) qui s'étend dans une direction verticale et au-dessus de ce corps principal pour venir coopérer avec le verrou (15).

5. Dispositif de fixation amovible d'une batterie d'un véhicule automobile selon la revendication précédente, **caractérisé en ce que** la partie inférieure (10) comprend une ouverture supérieure (13) au travers de laquelle passe la vis (11), le verrou (15) se trouvant au-dessus de cette ouverture (13).

6. Procédure de montage/démontage d'une batterie sur un véhicule automobile, à l'aide d'un dispositif de fixation amovible selon l'une des revendications précédentes, **caractérisé en ce qu'**il comprend les étapes suivantes :
(E1): positionnement d'un verrou (15) d'une partie mâle (10) au sein d'une ouverture (5) d'une partie femelle (2) ;
(E2) : rotation du verrou (15) pour obtenir son verrouillage/déverrouillage au sein de la partie femelle (2), de sorte de verrouiller/déverrouiller la batterie sur le véhicule automobile ;
(E3): rotation d'une vis (11) comprenant une partie filetée (17) pour obtenir le serrage/desserrage du dispositif de fixation amovible.

7. Procédure de montage/démontage d'une batterie sur un véhicule automobile selon la revendication précédente, **caractérisé en ce que** la seconde étape (E2) comprend la rotation (R) de la vis (11) entraînant la rotation du verrou (15) jusqu'à son arrivée contre une butée (22) et **en ce que** la troisième étape (E3) comprend la rotation (R) de la vis (11) induisant la coopération de sa partie filetée (17) avec une partie filetée (23) du verrou (15), ce dernier (15) restant fixé en rotation contre la butée (22).

8. Partie inférieure (10) d'un dispositif de fixation amovible d'une batterie d'un véhicule automobile selon une des revendication 1 à 5 comprenant un moyen (12) de liaison avec une batterie (30), et comprenant un verrou (15) lié à une vis (11) comprenant une partie filetée (17), **caractérisé en ce que** la partie inférieure permette le verrouillage et déverrouillage puis le serrage et desserrage avec une partie supérieure (2) par une double étape de rotation de la vis (11), et **en ce qu'**elle comprend une butée (22) coopérant avec le verrou (15), ce dernier comprenant une ouverture filetée (23) coopérant avec la partie filetée (17) de la vis (11), de sorte qu'une première rotation de la vis (11) entraîne la rotation du verrou (15) jusqu'à son appui contre la butée (22) et de sorte qu'une seconde rotation de la vis (11) entraîne le vissage du verrou (15) sur la vis (11).

9. Véhicule automobile comprenant une batterie d'alimentation **caractérisé en ce qu'**il comprend au moins un dispositif de fixation amovible de sa batterie (30) selon l'une des revendications 1 à 5.

10. Véhicule automobile selon la revendication précédente, **caractérisé en ce que** la partie supérieure (2) du au moins un dispositif de fixation amovible est fixée sous le châssis ou sous le coffre du véhicule automobile.

## Patentansprüche

1. Abnehmbare Befestigungsvorrichtung einer Batterie (30) eines Kraftfahrzeugs, die einen oberen Teil (2) aufweist, der ein Mittel (4) zum Befestigen auf einem Kraftfahrzeug und einen unteren Teil (10) aufweist, der ein Mittel (12) zum Verbinden mit der Batterie (30) aufweist, einen Riegel (15) und eine Schraube (11), die einen Gewindeteil (17) derart aufweist, dass das Verriegeln und Entriegeln und dann das Spannen und Entspannen des oberen (2) und des unteren Teils (10) miteinander erlaubt werden, **dadurch gekennzeichnet dass** sie einen Anschlag (22) aufweist, der mit dem Riegel (15) zusammenwirkt, wobei dieser Letztere eine Gewindeöffnung (23) aufweist, die mit dem Gewindeteil (17) der Schraube (11) derart zusammenwirkt, dass eine erste Drehung der Schraube (11) die Drehung des Riegels (15) bis zu seinem Anliegen gegen den Anschlag (22) bewirkt, und derart, dass eine zweite Drehung der Schraube (11) das Schrauben des Riegels (15) auf der Schraube (11) bewirkt.

2. Abnehmbare Befestigungsvorrichtung einer Batterie eines Kraftfahrzeugs nach dem vorhergehenden Anspruch, **dadurch gekennzeichnet, dass** das Mittel (12) zum Verbinden mit der Batterie (30) des unteren Teils (10) aus einer horizontalen Oberfläche besteht, die das vertikale Aufliegen der Batterie tragen kann.

3. Abnehmbare Befestigungsvorrichtung einer Batterie eines Kraftfahrzeugs nach einem der vorhergehenden Ansprüche, **dadurch gekennzeichnet, dass** der obere Teil (2) eine untere Oberfläche (6) aufweist, die im Wesentlichen flach ist, die eine Öffnung (5) zu einem Hohlraum (7), der ein Schloss bildet, aufweist, und dass der untere Teil (10) den Riegel (15) und die Schraube (11) aufweist.

4. Abnehmbare Befestigungsvorrichtung einer Batterie eines Kraftfahrzeugs nach dem vorhergehenden Anspruch, **dadurch gekennzeichnet, dass** der untere Teil (10) einen Hauptkörper (12, 18) aufweist, in dessen Innerem die Schraube (11), die sich in eine vertikale Richtung und oberhalb dieses Hauptkörpers erstreckt, um mit dem Riegel (15) zusammenzuwirken, in Drehung beweglich montiert ist.

5. Abnehmbare Befestigungsvorrichtung einer Batterie eines Kraftfahrzeugs nach dem vorhergehenden Anspruch, **dadurch gekennzeichnet, dass** der untere Teil (10) eine obere Öffnung (13) aufweist, durch die die Schraube (11) durchgeht, wobei sich der Riegel (15) oberhalb dieser Öffnung (13) befindet.

6. Vorgehensweise zur Montage/Demontage einer Batterie auf einem Kraftfahrzeug mit Hilfe einer abnehmbaren Befestigungsvorrichtung nach einem der vorhergehenden Ansprüche, **dadurch gekennzeichnet, dass** sie die folgenden Schritte aufweist:
(E1) : Positionieren eines Riegels (15) eines Steckteils (10) innerhalb einer Öffnung (5) eines Buchsenteils (2),
(E2): Drehung des Riegels (15), um sein Verriegeln/Entriegeln innerhalb des Buchsenteils (2) derart zu erzielen, dass die Batterie auf dem Kraftfahrzeug verriegelt/entriegelt wird,
(E3): Drehung einer Schraube (11), die einen Gewindeteil (17) aufweist, um das Spannen/Entspannen der abnehmbaren Befestigungsvorrichtung zu erzielen.

7. Vorgehensweise zur Montage/Demontage einer Batterie auf einem Kraftfahrzeug nach dem vorhergehenden Anspruch, **dadurch gekennzeichnet, dass** der zweite Schritt (E2) die Drehung (R) der Schraube (11), die die Drehung des Riegels (15) bis zu seiner Ankunft gegen einen Anschlag (22) bewirkt, aufweist, und dass der dritte Schritt (E3) die Drehung (R) der Schraube (11), die das Zusammenwirken ihres Gewindeteils (17) mit einem Gewindeteil (23) des Riegels (15) bewirkt, aufweist, wobei dieser Letztere (15) gegen den Anschlag (22) drehfest bleibt.

8. Unterer Teil (10) einer abnehmbaren Befestigungsvorrichtung einer Batterie eines Kraftfahrzeugs nach einem der Ansprüche 1 bis 5, der ein Mittel (12) zum Verbinden mit einer Batterie (30) aufweist, und einen Riegel (15) aufweist, der mit einer Schraube (11) verbunden ist, die einen Gewindeteil (17) aufweist, **dadurch gekennzeichnet, dass** der untere Teil das Verriegeln und Entriegeln und dann das Spannen und Entspannen mit einem oberen Teil (2) durch einen doppelten Rotationsschritt der Schraube (11) erlaubt, und dadurch, dass er einen Anschlag (22) aufweist, der mit dem Riegel (15) zusammenwirkt, wobei dieser Letztere eine Gewindeöffnung (23) aufweist, die mit dem Gewindeteil (17) der Schraube (11) derart zusammenwirkt, dass eine erste Drehung der Schraube (11) die Drehung des Riegels (15) bis zu seinem Aufliegen gegen den Anschlag (22) bewirkt, und derart, dass eine zweite Drehung der Schraube (11) das Schrauben des Riegels (15) auf der Schraube (11) bewirkt.

9. Kraftfahrzeug, das eine Versorgungsbatterie aufweist, **dadurch gekennzeichnet, dass** es mindestens eine abnehmbare Befestigungsvorrichtung seiner Batterie (30) nach einem der Ansprüche 1 bis 5 aufweist.

10. Kraftfahrzeug nach dem vorhergehenden Anspruch, **dadurch gekennzeichnet, dass** der obere Teil (2) der mindestens einen abnehmbaren Befestigungsvorrichtung unter dem Chassis oder unter dem Kofferraum des Kraftfahrzeugs befestigt ist.

## Claims

1. Device for the removable attachment of a battery (30) of a motor vehicle, comprising a top portion (2) comprising a means (4) for attachment to a motor vehicle and a bottom portion (10) comprising a means (12) for connection with the battery (30), a latch (15) and a screw (11) comprising a threaded portion (17) so as to allow the locking and unlocking then the mutual tightening and loosening of the two portions, the top portion (2) and bottom portion (10) **characterized in that** it comprises an abutment (22) interacting with the latch (15), the latter comprising a threaded opening (23) interacting with the threaded portion (17) of the screw (11) so that a first rotation of the screw (11) causes the rotation of the latch (15) until it rests against the abutment (22) and so that a second rotation of the screw (11) causes the screwing of the latch (15) onto the screw (11).

2. Device for the removable attachment of a battery of a motor vehicle according to the preceding claim, **characterized in that** the means (12) for connection with the battery (30) of the bottom portion (10) consists of a horizontal surface that can support the vertical pressure of the battery.

3. Device for the removable attachment of a battery of a motor vehicle according to either of the preceding claims, **characterized in that** the top portion (2) comprises a substantially flat bottom surface (6) comprising an opening (5) to a hollow volume (7), forming a lock, and **in that** the bottom portion (10) comprises the latch (15) and the screw (11).

4. Device for the removable attachment of a battery of a motor vehicle according to the preceding claim, **characterized in that** the bottom portion (10) comprises a main body (12, 18) within which is mounted so as to be able to rotate the screw (11) which extends in a vertical direction and above this main body in order to interact with the latch (15).

5. Device for the removable attachment of a battery of a motor vehicle according to the preceding claim, **characterized in that** the bottom portion (10) comprises a top opening (13) through which the screw (11) passes, the latch (15) being above this opening (13).

6. Procedure for mounting/removing a battery on a motor vehicle, with the aid of a removable attachment device according to one of the preceding claims, **characterized in that** it comprises the following steps:
(E1): positioning of a latch (15) of a male portion (10) within an opening (5) of a female portion (2);
(E2): rotation of the latch (15) in order to obtain its locking/unlocking within the female portion (2) so as to lock/unlock the battery on the motor vehicle;
(E3): rotation of a screw (11) comprising a threaded portion (17) in order to obtain the tightening/loosening of the removable attachment device.

7. Procedure for mounting/removing a battery on a motor vehicle according to the preceding claim, **characterized in that** the second step (E2) comprises the rotation (R) of the screw (11) causing the rotation of the latch (15) until it arrives against an abutment (22) and **in that** the third step (E3) comprises the rotation (R) of the screw (11) inducing the interaction of its threaded portion (17) with a threaded portion (23) of the latch (15), the latter (15) remaining rotatably fixed against the abutment (22).

8. Bottom portion (10) of a device for the removable attachment of a battery of a motor vehicle according to one of Claims 1 to 5, comprising a means (12) for connection to a battery (30), and comprising a latch (15) connected to a screw (11) comprising a threaded portion (17), **characterized in that** the bottom portion allows the locking and unlocking and then the tightening and loosening with a top portion (2) by a double step of rotation of the screw (11), and **in that** it comprises an abutment (22) interacting with the latch (15), the latter comprising a threaded opening (23) interacting with the threaded portion (17) of the screw (11) so that a first rotation of the screw (11) causes the rotation of the latch (15) until it rests against the abutment (22) and so that a second rotation of the screw (11) causes the screwing of the latch (15) onto the screw (11).

9. Motor vehicle comprising a power-supply battery, **characterized in that** it comprises at least one device for the removable attachment of its battery (30) according to one of Claims 1 to 5.

10. Motor vehicle according to the preceding claim, **characterized in that** the top portion (2) of the at least one removable attachment device is attached under the chassis or under the trunk of the motor vehicle.
